# EUROPEAN PATENT APPLICATION

(11) **EP 4 841 488 A1**
(43) Date of publication of application: **18.11.2026**
(21) Application number: 25382479.1
(22) Date of filing: 12.05.2025
(51) Int. Cl.: G06F 21/34, G06Q 20/34, H04L 9/40

(54) **METHOD OF AUTHENTICATING A USER FOR ACCESSING A DATA OBJECT WITH AT LEAST TWO PORTABLE DATA CARRIERS, AS WELL AS CORRESPONDING PORTABLE DATA CARRIER, AND AUTHENTICATION SYSTEM**

(71) Applicant: Giesecke+Devrient ePayments GmbH, 81677 München (DE)
(72) Inventor: Carvajal Gomis, Marc, 08820 El Prat de Llobregat (Barcelona) (ES); Constans, Nil, 08820 El Prat de Llobregat (Barcelona) (ES); Molina Vidal, Carles, 08820 El Prat de Llobregat (Barcelona) (ES); Gavaldà Serra, Pau, 08820 El Prat de Llobregat (Barcelona) (ES)
(74) Representative: LKGLOBAL Partnerschaftsgesellschaft mbB

(57) **Abstract**

A method, a portable data carrier (2), , and an authentication system (1) are provided, wherein for accessing a data object (D), in particular for enabling financial transactions, the method comprising the steps of providing at least two authentication objects (E, F) for authenticating the user (U); storing the at least two authentication objects (E, F) on at least two separate portable data carriers (3); and enabling access to the data object (D) by joining the at least two portable data carriers (3) for presenting and/or combining the at least two authentication objects (E, F).

## Description

### Technical Field

The present disclosure relates to the field of data security and secure transactions, such as financial transactions. In particular, the present disclosure relates to a method of authenticating a user for accessing a data object, in particular for enabling financial transactions, a portable data carrier and an authentication system.

### Background of the Invention

The need for securing data objects against unauthorised access is omnipresent in present private and professional communication environments. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. According to the state of the art, data objects are commonly protected by passwords and/or pins, which can be defined permanently by a user or altered dynamically, for example, as one-time passwords (OTP). One for improving the security of data objects as known from the prior art is seen in using biometric features, such as fingerprints, iris scans, natural language recognition, etc., for authenticating at user, which in turn bring new challenges in verifying authenticity of such features.

Methods and systems for securing financial transactions in electronic payment environments, such as e-commerce environments, are also known from the prior art. Such financial transactions mainly take place when money has to be transferred from a sender to a receiver via wire transfer, for example, when customers purchase goods in e-commerce environments, such as online shops, via the Internet, or alike. The financial transactions have to be secured against any unauthorised use of any data involved in the transactions and respective communications, so that the data, such as access data to accounts and/or transaction codes of customers and/or vendors involved, cannot be misused in a fraudulent way.

One way known from the prior art to secure access to data objects, such as enabling access to bank accounts for initiating financial transactions, or alike, lies in the application of portable data carriers in the form of so-called transaction cards, also known as chip cards which can be used, for example, for cashless payment of goods or services, for personal identification and/or for access to Internet-based application programs. Accordingly, there are, for example, card-shaped data carriers in the form of chip cards in general, payment cards, such as credit cards or debit cards, as well as ID cards or identity cards. Such chip cards usually have a card body carrying a chip module comprising an electronic circuit with an electronic component, such as an integrated chip, which can be accessed in order to read data from it and based on this, allow a legitimate owner of the data carrier to perform and/or authorize a specific action, such as a financial. Certain functions of the chip card may be carried out in a contactless manner through an antenna element embedded in the card body and connected to the chip module, so that the chip module may be accessed in a contactless manner, for example, by a corresponding terminal, such as a payment terminal, via near field communication (NFC).

CN 102096967 A, for example, relates to an off-line payment method and a consumption terminal for electronic purse. The method comprises the following steps: the consumption terminal obtains a signature stored in a user card, wherein the signature is generated by the private key of a card issuing party; and the consumption terminal verifies the signature and performs off-line payment by the electronic purse after the signature is verified. In the method, the weak link that only a terminal security control module PSAM (purchase secure access module) is depended to identify whether the user card is true or false can be enhanced, and the card issuing party indirectly participates in the off-line consumption certification process of the electronic purse, thereby effectively preventing attackers from illegally copying false cards on batch by utilizing the weak point of the off-line transaction of the electronic card at present. Meanwhile, the system risk is burdened on the card holder, and attackers have no opportunity if the card holder appropriately keeps the self card.

CN 201421617 Y describes a double-magnetic strip trading card which consists of a core layer and an upper and lower transparent coating layer. An anti-counterfeit label, a signature strip and other safety elements can be attached to the surface of the transparent coating layer; and two magnetic strips are framed on the surface of a card body. The trading card has multiple functions and overcomes the defect that the prior trading card only can be used in one field, thereby providing a novel manner of designing and saving the cost. Furthermore, the utility model satisfies the individual demands of the card and conforms to the requirements of moderns for going after convenient and efficient trading and fashionable tide.

Methods and systems known from the prior art for securing data objects may not fully satisfy the needs of modern communication environments. In particular, current authentication processes are not considering situations involving especially high trust levels of data objects. For example, under certain circumstances, such as for data objects, which belong to multiple users, such as shared or common bank accounts, the prior art does not provide appropriate means for enabling secure accesses in a manner that is controllable by all of the users.

### Summary of the Invention

It may be seen as an object underlying the present invention to provide improved security for authenticating users and securing data objects. In particular, it may be seen as an object to provide a way to securely handle authentication procedures for allowing access to data objects involving multiple users. These and further objects are at least partly achieved by the subject-matter of the independent claims.

According to an aspect, a method of authenticating a user for accessing a data object, in particular for enabling financial transactions, is provided, the method comprising the steps of providing at least two authentication objects for authenticating the user; storing the at least two authentication objects on at least two separate portable data carriers; and enabling access to the data object by joining the at least two portable data carriers for presenting and/or combining the at least two authentication objects.

According to an aspect, a portable data carrier, in particular a transaction card, is provided, configured to carry out a corresponding method.

According to an aspect, an authentication system is provided, configured to carry out a corresponding method and/or comprising a corresponding portable data carrier.

The data object can be configured to enable a secure connection and/or restricted access to a respective service and/or can be a secured service, such as a respective financial transaction service, itself, or at least a part thereof. The proposed solution provides enhanced security options for setups involving multiple users which may control the at least two portable data carriers. Thereby, the proposed solution has the decisive advantage over the prior art that a highly secure access can be provided, for example, in under zero trust circumstances, where it is necessary and/or desired to distribute portable data carriers and thus authentication objects amongst at least two users or parties involved.

Further developments can be derived from the dependent claims and from the following description. Features described with reference to a computing device, such as a user device, and/or server device, and components thereof may be implemented as method steps, or vice versa. Therefore, the description provided in the context of the user device, and/or server device, and their components apply in an analogous manner also to respective methods. In particular, features and functions of the user device, and/or server device, and their components may be implemented as method steps which in turn may be implemented as respective device features or functions.

According to a possible embodiment, the at least two portable data carriers each comprise a connection interface for joining them with each other. The respective authentication objects can be combined and/or transferred via the connection interface. This further helps in providing enhanced security options for setups involving multiple users which may control the at least two portable data carriers.

According to a possible embodiment, the at least two portable data carriers are joined by bringing them in physical contact with each other. For example, the respective connection interfaces can be brought in physical contact with each other. Thereby, a highly secure way of joining the data carriers, combining and/or transferring the authentication objects can be provided.

According to a possible embodiment, the method further comprises the step of mutually authenticating the at least two portable data carriers by means of the respective at least two authentication objects. With other words, each of the data carriers may authenticate at least one respective other data carriers. This helps in providing a highly secure way for enabling accesses to data objects involving multiple users.

According to a possible embodiment, the at least two portable data carriers comprise at least one communication interface for communicating with a transaction terminal. The communication interface may be provided separately from the connection interface. Thereby, two separate interfaces for communication and for authentication may be provided.

According to a possible embodiment, the at least two portable data carriers are provided in the form of chip cards. The chip cards can be configured to be used in conjunction with each other in order to provide access to a data object, in particular for enabling financial transactions. This further helps in providing a highly secure way for enabling accesses to data objects involving multiple users.

According to a possible embodiment, the at least two portable data carriers are being issued to at least two respective users. The at least two users may be common owners and/or may have dual signature rights with respect to the data object. This additionally helps in providing a highly secure way for enabling accesses to data objects involving multiple users.

According to a possible embodiment, the at least two portable data carriers comprise a main carrier and an auxiliary carrier. For example, the main data carrier may comprise the communication interface, while both, the main and the auxiliary data carrier, comprise respective connection interfaces. Thereby, the main data carrier can be used for enabling the access to the data object by communicating via the communication interface with a further entity, such as a communication terminal, for example, a transaction terminal, while the at least two data carriers are joined with each other, thereby providing a highly secured access to the data object.

### Brief Description of the Drawings

- Fig. 1: is a schematic illustration of an authentication system configured to carry out a method according to the present invention.
- Fig. 2: is a schematic top view of an exemplary embodiment of a portable data carrier configured as a main carrier.
- Fig. 3: is a schematic bottom view of the portable data carrier shown in Fig. 1.
- Fig. 4: is a schematic top view of an exemplary embodiment of a portable data carrier configured as an auxiliary carrier.
- Fig. 5: is a schematic bottom view of the portable data carrier shown in Fig. 4.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject-matter may be obtained through a review of the illustrations together with a review of the detailed description that follows.

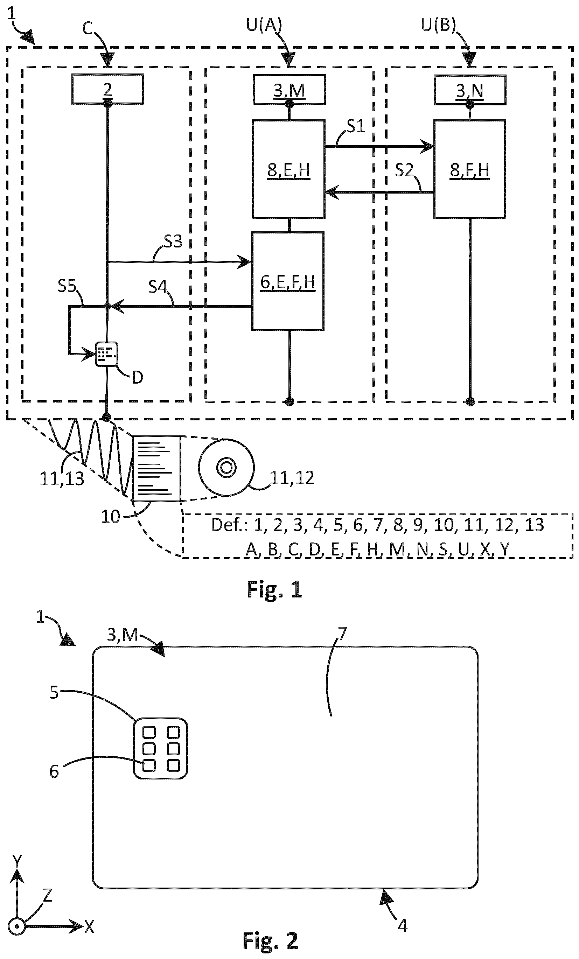

Fig. 1 shows a schematic illustration of an authentication system 1 configured to carry out a method according to the present invention. The authentication system 1 involves participating users U, for example, at least as a first participant A and a second participant B. Furthermore, the authentication system 1 may involve a trusted entity C which may operate a computing device 2, for example, a terminal device and/or server device, which may grant access to a data object D. The first participant A and the second participant B can each be provided with a portable data carrier 2 such as a chip card, transaction card, or alike, capable of handling authentication objects E, F which may provide an authentication construct H, and may therefore be configured as a main carrier M and an auxiliary carrier N holding a first or main authentication object E and/or a second or auxiliary authentication object F, respectively.

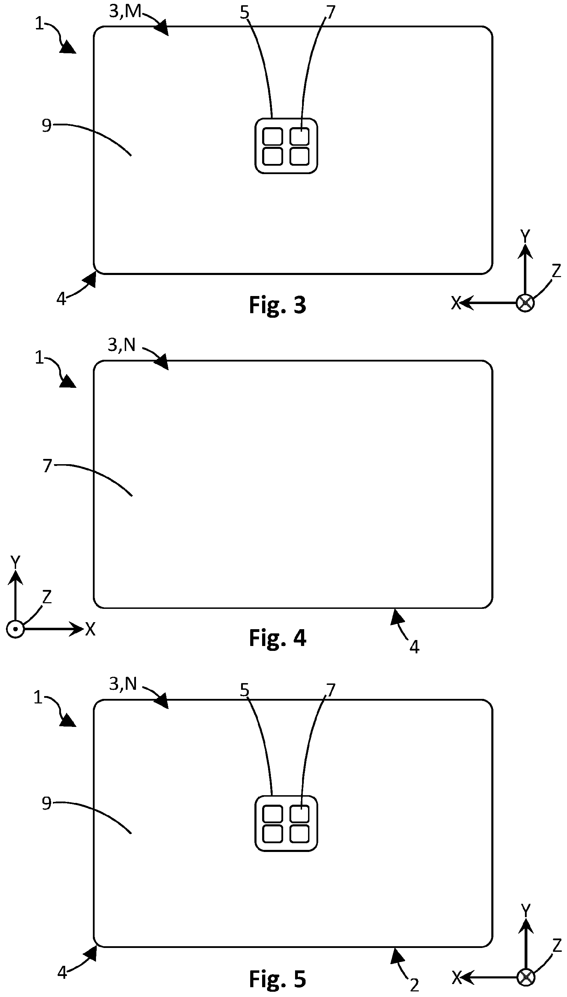

The portable data carriers 3 may comprise a card body 4 and a chip module 5 providing a communication interface 6 which can be arranged at a front face 7 of the portable data carriers 3 (see Fig. 2). Furthermore, the portable data carriers may comprise a connection interface 8 which can be arranged at a back face 9 of the portable data carriers 3 (see Figs. 3 and 5). The portable data carriers 1 can extend in a longitudinal direction X, a transverse direction Y, and a height direction Z, together forming a Cartesian coordinate system.

In any of the embodiments of the authentication system 1 as described herein, in particular the computing devices 2 and/or portable data carriers 3, can be configured to execute a computer program in the form of a authentication program 10. A computer-readable data carrier 11 can have stored thereon the authentication program 10 and may take the form of a computer-readable medium 12 and/or data carrier signal 13. When carrying out the authentication program 10, the authentication system 1 and any components thereof communicate as specified in the authentication program 10. Parameters associated with and/or underlying the authentication system 1, any of the components thereof and/or any steps S carried out thereby, can be defined in and/or by the authentication program 10.

A data exchange taking place between the portable data carrier 3, for example, the main carrier M, of the first participant A and the portable data carrier 3, for example, the auxiliary carrier N, of the second participant B may have several steps S. In a first step S1, the main carrier M may provide the first authentication object E to the auxiliary carrier N which may thereby form the authentication construct H and/or may be triggered to provide the second authentication object F for performing a mutual authentication of the portable data carriers 3. In a second step S2, the auxiliary carrier N may provide the second authentication object F and/or the authentication construct to the main carrier M for concluding the mutual authentication.

The authentication objects E, F and/or the authentication construct H, which may constitute a further authentication object by and/or within itself, may be exchanged between the portable data carriers 3 through their respective communication interfaces 8. The authentication construct H may be provided as a result of a mutual authentication of the portable data carriers 3. Alternatively, or additionally, the authentication objects E, F, and/or authentication construct H may be unlocked by joining the portable data carriers 3.

In a third step S3, the computing device 2 may query the portable data carriers 3 in conjunction and/or individually, to provide the authentication objects E, F, and/or the authentication construct H, for example, through the communication interface 6 of the main carrier M. In a fourth step S4, the portable data carriers 3 in conjunction and/or individually, may provide and/or send the authentication objects E, F, and/or the authentication construct H to the computing device 2, for example, through the communication interface 6 of the main carrier M. In a fifth step S5, if an authentication through the authentication objects E, F, and/or the authentication construct H is successful, the computing device 2 may grant access to the data object D, for example, by enabling and/or carrying out a financial transaction, data access, or alike.

Fig. 2 shows is a schematic top view of an exemplary embodiment of a portable data carrier 3 configured as a main carrier M. The chip module 3 may be provided with electrical contact surfaces positioned at the front face 9 of the card body 4 and providing access to the communication interface 6 as contact elements for establishing an electrical contact with the chip module 3 and any component thereof and/or connected thereto. Alternatively, or additionally, antenna element (not shown) can be electrically connected to the chip module 3 and/or to any component thereof or connected thereto for enabling wireless communication, for example, near field communication (NFC) with the computing device 2, such as a respective terminal device.

Fig. 3 shows is a schematic bottom view of the portable data carrier shown in Fig. 1. The connection interface 8 may be provided via contact surfaces positioned at the back face 9 of the card body 4. Either the chip module 5 or an additional chip module 5 of the portable data carrier 3 may be provided to hold and/or store the authentication objects E, F, and/or the authentication construct H.

Fig. 4 shows is a schematic top view of an exemplary embodiment of a portable data carrier 3 configured as an auxiliary carrier N. The front face of the portable data carrier 3 may not be provided with the communication interface 6, if desired or required. Nevertheless, the portable data carrier may as well comprise a chip module 5 for providing the connection interface 8 and/or to hold and/or store the authentication objects E, F, and/or the authentication construct H, respectively.

Fig. 5 shows is a schematic bottom view of the portable data carrier shown in Fig. 4. The connection interface 8 may again be provided via contact surfaces positioned at the back face 9 of the card body 4. Either the chip module 5 or an additional chip module 5 of the portable data carrier 3 may be provided to hold and/or store the authentication objects E, F, and/or the authentication construct H.

The present example embodiments allow for adding a security layer in the authentication system 1. For example, data objects D in the form of banking accounts would have two portable data carriers 3 in the form of banking cards linked and only when using the two cards at the same time the account could be accessed. These two cards would interact with each other by their connection interfaces 8, for example, by holding them back-to back with their back faces 9, and only after authentication the transaction would be approved. In contrast to that, regular cards for banking accounts as known from the prior art with more than one owner can be used by each owner without the other being present. Additionally in case of loss or steal the card can be used by third persons which is prevented by the present authentication system 1.

The subject matter disclosed herein can be implemented in or with software in combination with hardware and/or firmware. For example, the subject matter described herein can be implemented in or with software executed by a processor or processing unit. In one example implementation, the subject matter described herein can be implemented using a computer readable medium having stored thereon computer executable instructions that when executed by a processor of a computer control the computer to perform steps. Example computer readable mediums suitable for implementing the subject matter described herein include non-transitory devices, such as disk memory devices, chip memory devices, programmable logic devices, and application specific integrated circuits. In addition, a computer readable medium that implements the subject matter described herein can be located on a single device or computing platform or can be distributed across multiple devices or computing platforms.

While at least one example embodiment of the invention(s) is disclosed herein, it should be understood that modifications, substitutions and alternatives may be apparent to one of ordinary skill in the art and can be made without departing from the scope of this disclosure. This disclosure is intended to cover any adaptations or variations of the example embodiment(s). In addition, in this disclosure, the terms "comprise" or "comprising" do not exclude other elements or steps, the terms "a", "an" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### Reference Signs

- 1: authentication system
- 2: computing device / transaction terminal
- 3: portable data carrier
- 4: card body
- 5: chip module
- 6: communication interface
- 7: front face
- 8: connection interface
- 9: back face
- 10: computer program / authentication program
- 11: computer-readable data carrier
- 12: computer-readable medium
- 13: data carrier signal

- A: first participant
- B: second participant
- C: trusted entity
- D: data object
- E: first / main authentication object
- F: second / auxiliary authentication object
- H: authentication construct / object
- M: first / main carrier
- N: second / auxiliary carrier
- S: step
- X: longitudinal direction
- Y: transverse direction
- Z: height direction

- S1: trigger mutual authentication
- S2: perform mutual authentication
- S3: query authentication object / construct
- S4: provide authentication object / construct
- S5: enable access to data object

## Claims

1. A method of authenticating a user (U) for accessing a data object (D), in particular for enabling financial transactions, the method comprising the steps of
providing at least two authentication objects (E, F) for authenticating the user (U);
storing the at least two authentication objects (E, F) on at least two separate portable data carriers (3); and
enabling access to the data object (D) by joining the at least two portable data carriers (3) for presenting and/or combining the at least two authentication objects (E, F).

2. The method according to claim 1, wherein the at least two portable data carriers (3) each comprise a connection interface (8) for joining them with each other.

3. The method according to claim 1 or 2, wherein the at least two portable data carriers are joined by bringing them in physical contact with each other.

4. The method according to at least one of claims 1 to 3, further comprising the step of mutually authenticating the at least two portable data carriers (3) by means of the respective at least two authentication objects (E, F).

5. The method according to at least one of claim 1 to 4, wherein the at least two portable data carriers (3) comprise at least one communication interface (6) for communicating with a transaction terminal.

6. The method according to at least one of claims 1 to 5, wherein the at least two portable data carriers (3) are provided in the form of chip cards.

7. The method according to at least one of claims 1 to 6, wherein the at least two portable data carriers (3) are being issued to at least two respective users (U, V).

8. The method according to at least one of claims 1 to 7, wherein the at least two portable data carriers (3) comprise a main carrier (M) and an auxiliary carrier (N).

9. Portable data carrier (3), in particular transaction card, configured to carry out a method according to at least one of claims 1 to 8.

10. Authentication system (1) configured to carry out a method according to at least one of claims 1 to 8 and/or comprising a portable data carrier (3) according to claim 9.
